# EUROPEAN PATENT SPECIFICATION

(11) **EP 0 827 904 B1**
(45) Date of publication and mention of the grant of the patent: **23.04.2003**
(21) Application number: 97306958.6
(22) Date of filing: 08.09.1997
(51) Int. Cl.: B63B 59/02

(54) **Marine fender**
Fender
Défense marine

(30) Priority: 06.09.1996 GB 9618607
(43) Date of publication of application: 11.03.1998
(73) Proprietor: Kyle, Tim, Bangor, Northern Ireland BT19 6EE (IE)
(72) Inventor: Kyle, Tim, Bangor, Northern Ireland BT19 6EE (IE)
(74) Representative: Pacitti, Paolo

(56) References cited:
- EP-A- 0 150 684
- DE-A- 3 413 477
- US-A- 4 343 258

## Description

This invention relates to a fender particularly but not exclusively for use in protecting boats, and to a fender system including such a fender.

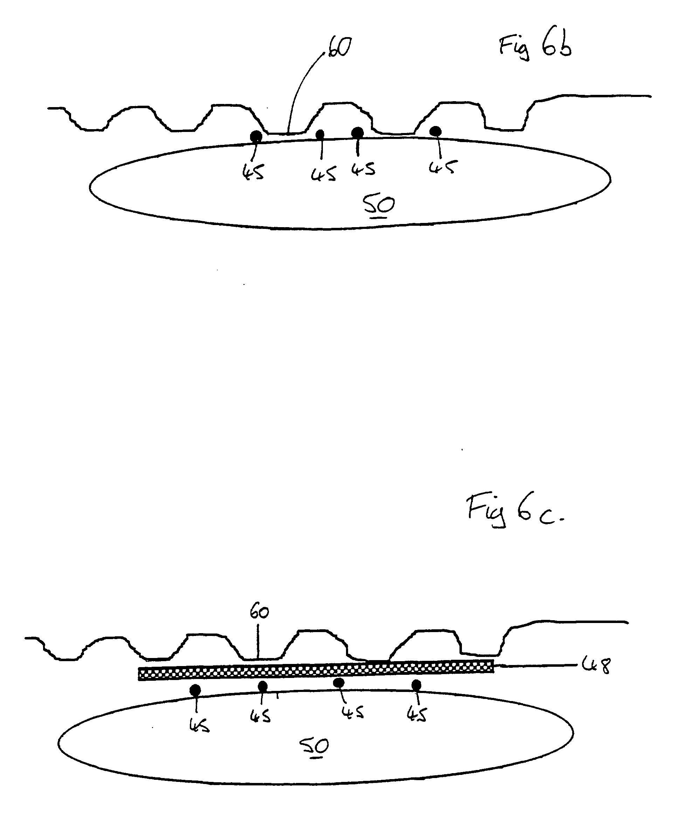

A known commonly used type of boat fender is generally cylindrical with an eyelet at one end for attaching a rope. Such a fender is adapted, in use, to hang generally vertically against the hull of the boat in order to protect the hull against contact with other objects such as harbour or marina walls. Each fender, individually, therefore protects only a small length of the hull. Providing a number of spaced apart, vertically hanging fenders along the length of the hull generally provides adequate protection to boats moored against a long, straight, regular surface, such as may be provided by a harbour wall. This arrangement is shown schematically in Fig. 6a.

Frequently, especially within the cruising fraternity, it is desired to moor a boat against a mooring surface which is irregular, such as a piled sheet pier. Known fenders alone offer inadequate protection in such circumstances, since irregularities in the mooring surface may protrude between the fenders, contacting and damaging the hull. This arrangement is shown schematically in Fig. 6b.

A known solution to this problem is to provide a plank between the fenders and the uneven mooring surface in order to prevent irregularities in the mooring surface from protruding between the fenders. Such an arrangement is shown schematically in Fig. 6c. Many boats carry a plank as a matter of routine to avoid the necessity of searching for a suitable length of timber when mooring against an uneven mooring surface away from their normal berth. However, if a plank is carried, storage of the plank may be cumbersome, since such planks may be of considerable length and space is often at a premium. If a plank is not carried, it may be difficult to find a suitable plank when required. It is therefore desirable to provide a fender or fender system which eliminates or mitigates the need for a plank when mooring against an irregular mooring surface. Document US-A-4343258 can be considered to form a basis for the preamble of claim 1.

According to a first aspect of the present invention there is provided a fender for a boat wherein said fender includes at least two connection portions able to overlap longitudinally with a connection portion of a similar adjacent fender to form a connected row of fenders, wherein at least one connection portion of said fender includes one or more connection apertures enabling the connection to a similar fender by insertion of a securing member through the respective connection apertures of connection portions of each of the fenders, and wherein each fender is usable as a vertically hanging fender without disconnection of any securing member, characterised in that said connection portions allow pivotal motion for the fender with respect to an adjacent connected fender.

Preferably the securing member is rope.

Preferably at least one of the connection portions includes an arcuate portion in order to allow relative pivotal motion of connected fenders.

Preferably said connection portions are adapted to allow pivotal motion of the fender, with respect to an adjacent connected fender, in a first plane but to restrict or substantially prevent pivotal motion in a second, substantially orthogonal, plane.

Preferably said connection portions include faces adapted to co-operate with faces of adjacent connected fenders so that the faces slidingly engage each other to allow relative pivotal motion of connected fenders.

Preferably at least one of said faces includes at least one groove in order to allow a connection member to be recessed therein.

Preferably the fender includes a connection portion having a male connection part adapted to be received in a female connection part of an adjacent fender.

Preferably the fender includes a connection portion having a female connection part adapted to receive a male connection part of an adjacent fender.

Preferably at least one connection portion includes at least one of a female connection portion in the form of a mortise-like part and a male connection portion in the form of a tenon-like part.

According to a second aspect of the present invention there is provided a fender system comprising a number of elongate fenders connected end to end in order to form a composite elongate fender, each fender being as hereinbefore defined by the first aspect of the present invention.

Preferably the composite elongate fender is adapted to be suspended by both ends thereof and to be relatively flexible in a first plane but relatively inflexible in a second, substantially orthogonal, plane.

Preferably the composite elongate fender is adapted to provide protection along substantially its entire length.

Preferably at least one of the fender elements has a female connection part and wherein there is provided a closing member for closing off said female connection part.

According to one embodiment of the present invention there is provided a closing member for closing off the female connection part of a fender according to the present invention.

Embodiments of the invention will be described, by way of example, with reference to the accompanying drawings in which:
Fig. 1 is a perspective view of a preferred embodiment of a fender in accordance with the present invention;
Figs. 2a, 2b and 2c are respectively side, plan and cross sectional views of an embodiment similar to the embodiment of Fig. 1;
Fig. 3a shows an embodiment of a fender system, comprising two fenders of the type shown in Fig. 1, prior to fitting together;
Fig. 3b shows the embodiment of Fig. 3 with the fenders fitted together, and secured with a rope, to form a composite elongate fender;
Fig. 4 shows an exploded view of a first fender and a schematic plan view of a second fender connected by a rope to the first fender, each fender corresponding the fender of Fig. 2;
Fig. 5 illustrates schematically the use of an embodiment of a fender system in accordance with the present invention in protecting a boat moored against an irregular mooring surface;
Fig. 6a illustrates schematically the use of prior art fenders in protecting a boat moored against a regular mooring surface;
Fig. 6b illustrates schematically the use of prior art fenders in protecting a boat moored against an irregular mooring surface; and
Fig. 6c illustrates schematically the use of prior art fenders and a plank in protecting a boat moored against an irregular mooring surface.

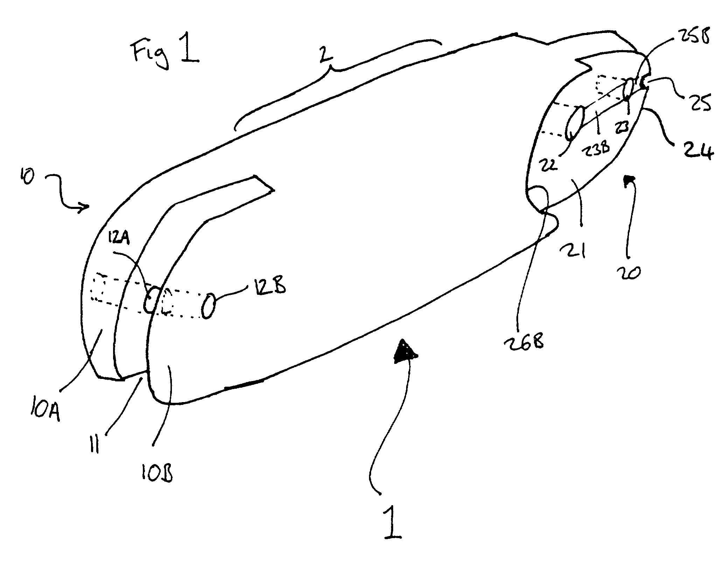

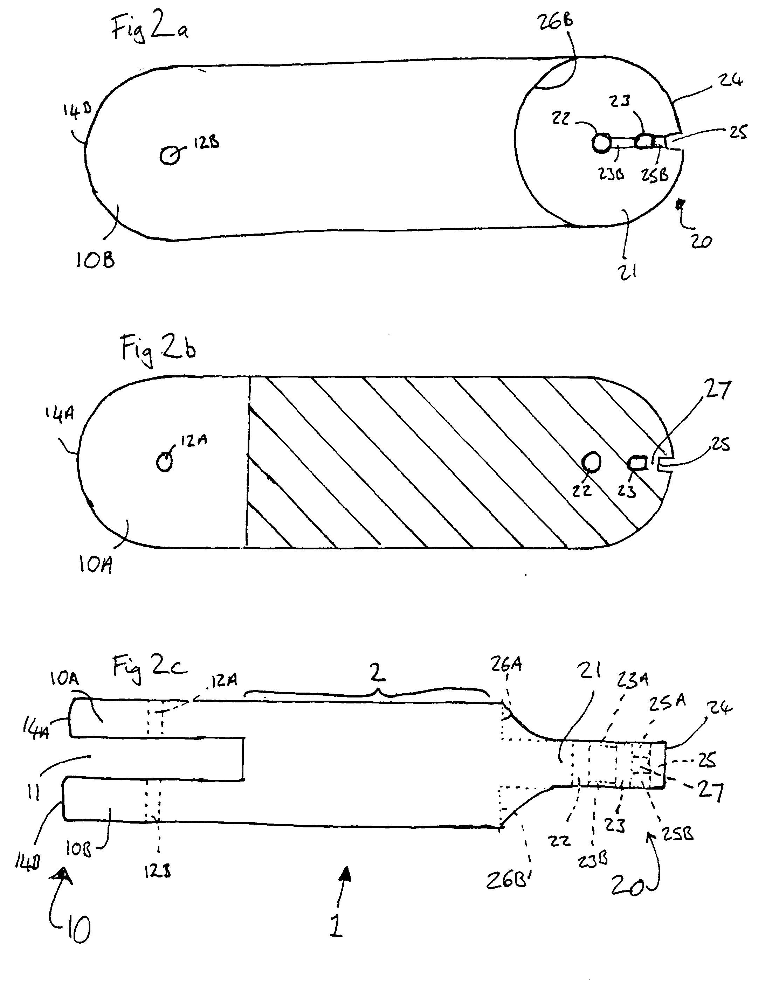

With reference to Fig. 1 an embodiment of a fender, generally designated 1, in accordance with the present invention comprises a generally cylindrical main body 2. Although generally cylindrical, the embodiment of Fig. 1 has a slightly oval radial cross section, and bulges slightly in the axially central portion, so that a circumference taken at an axial centre of the fender is slightly greater than the circumference nearer the ends. The embodiment of Figs. 2 to 2c differs in shape from the embodiment of Fig. 1 in that it is cylindrical and there is no central bulge. However, because the embodiments of Fig. 1 and of Figs. 2 to 2c are similar, except for the variation in shape, corresponding reference numerals will be used to designate corresponding parts.

The fender 1 has a first, mortise-like, connection portion 10 at a first end thereof. The first connection portion 10 comprises a female connection portion in the form of a slot 11 defined by first and second arm portions 10A, 10B. The first arm portion 10A is provided with a first-arm aperture 12A which extends therethrough connecting the slot 11 with an outer surface of the fender. The second arm portion 10B is provided with a second-arm aperture 12B, coaxial with the first-arm aperture 12A, therethrough.

The first and second arm portions 10A, 10B have axially outermost ends 14A, 14B which are arcuate in form. The axis of the first and second arm apertures is located to pass through the respective centres of curvature of the arcuate axially outermost ends 14A, 14B.

The fender 1 has a second, tenon-like, connection portion 20 at a second end thereof. The second connection portion 20 comprises a male connection portion in the form of a tongue 21 which is continuous with the main portion of the body of the fender 1 and which extends axially therefrom. In the embodiment of Figs 2a, 2b and 2c the tongue has a thickness equivalent to approximately one third of the diameter of the fender 1. Extending through the tongue 21 is a tongue connection aperture 22. Also extending through the tongue 21 is an eyelet aperture 23. The tongue has an outermost end 24 which is arcuate in form. A tongue notch 25 which extends towards the eyelet aperture 23 is provided at the centre of arcuate surface of the end 24. The tongue notch extends through the thickness of the tongue 21. The tongue notch 25 is separated from the eyelet aperture 23 by a tying member 27 (shown best in Fig. 2b). First and second notch-eyelet grooves 25A, 25B are formed in the tying member 27 and run along the surfaces of the tongue between the tongue notch 25 and the eyelet aperture 23. First and second aperture-eyelet grooves 23A, 23B run along the surfaces of the tongue between the eyelet aperture 23 and the tongue connection aperture. The grooves 23A, 23B, 25A, 25B form recessed channels in which ropes may run without extending beyond the surfaces of the tongue 21.

The tongue 21 has an innermost end where it connects to the main body 2 of the fender 1. The change in thickness between the innermost end of the tongue 21 and the main body 2 occurs at first and second arcuate shoulders 26A, 26B. The axis of the tongue connection aperture 22 passes through the centres of curvature of the first and second arcuate shoulders 26A, 26B.

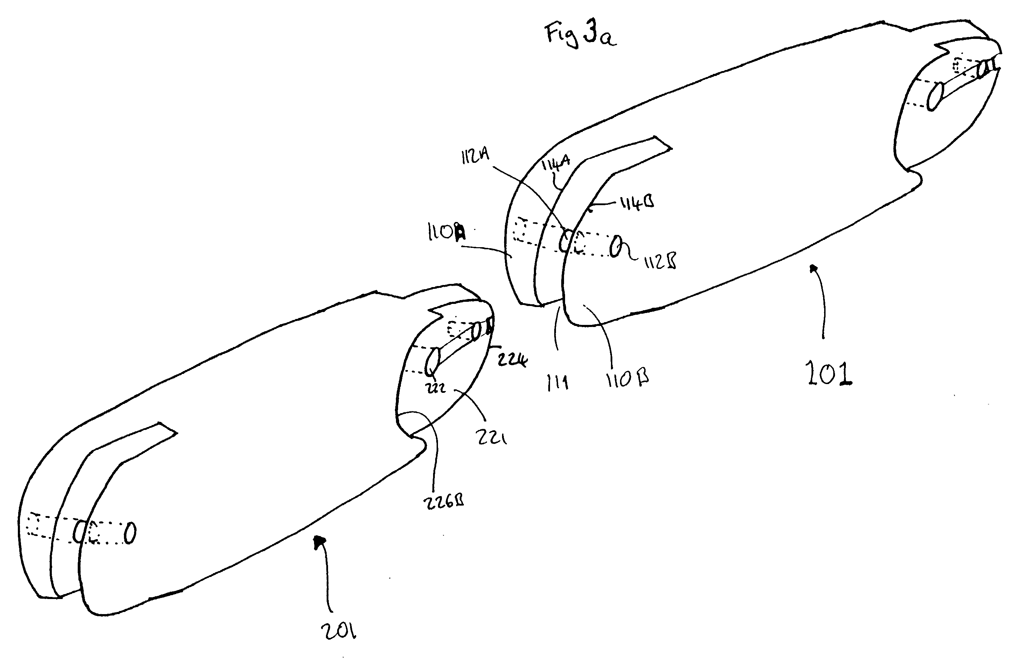

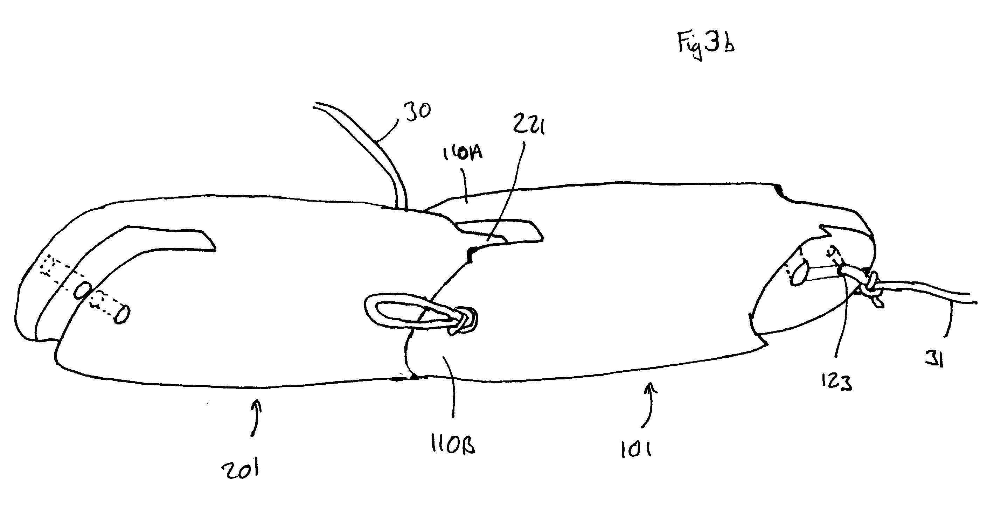

Fig. 3a shows a first fender 101 and a second similar fender 201 immediately prior to connecting together in order to form a longer continuous composite fender. Fig. 3b shows the fenders connected by a rope to form a longer continuous composite fender. The first fender 101 and second fender 201 are each generally similar to the fender 1 or Fig. 1 and similar elements are designated by similar reference numerals prefixed by the numerals 1 or 2 respectively.

In order to connect the first fender 101 to the second fender 201 the tongue 221 of the second fender 201 is inserted into the slot 111 of the first fender 101. The tongue 221 is thus located between the first arm portion 110A and the second arm portion 110B of the first fender 101. The outer, generally planar, surfaces of the tongue 221, engage the inner, generally planar surfaces of the first arm portion 110A and second arm portion 110B. In order to secure the first fender 101 and second fender 201 together, a securing member, shown in the form of a rope 30 in Fig. 3b, is passed through the first arm aperture 112A of the first fender, the tongue connection aperture 222 of the second fender and the second arm aperture 112B of the first fender.

It will be appreciated that the tongue connection aperture 222 is substantially at the centre of the radius of curvature of the first arcuate shoulder (not shown) and second arcuate shoulder 226B, and the first and second arm apertures 112A, 112B are substantially at the centre of the radius of curvature of the first and second arcuate outermost ends 114A, 114B of the arm members 110A, 110B. Thus when a securing member, such as a rope 30, is passed through the apertures 112A, 222, 112B in order to align those apertures, the first outermost end 114A engages the first arcuate shoulder (not shown) and the second outermost end 114B engages the second arcuate shoulder 226B. When secured, the first and second fenders 101, 201 are thus able to pivot relative to each other about the aligned apertures 112A, 222, 112B in the plane substantially co-planar with the tongue 221. In this embodiment, the fenders are unable to pivot substantially, relative to each other, in other planes.

Although, in this embodiment, the tongue member 221 is of approximately the same thickness as the slot 111, and the distance between the tongue aperture 222 and the arcuate shoulders 226B is approximately the same as the distance between the arm apertures 112A, 112B and the outermost ends 114A, 114B of the arms, these distances may, of course, be varied in order to provide any desired degree of play required. Different degrees of play will be desired according to, for example, the coefficient of friction of the material from which the connecting portions are made, the degree to which the material might expand in the presence of moisture, etc.

As can be seen in Fig. 3b, a hanging member 31 in the form of a rope, can be tied through the eyelet aperture 123, around the tying member 127. This enables the composite fender to be supported at its end. A hanging member can be used in a similar way to hang a fender 123, when it is not connected to another fender, for use as a conventional vertically hanging fender.

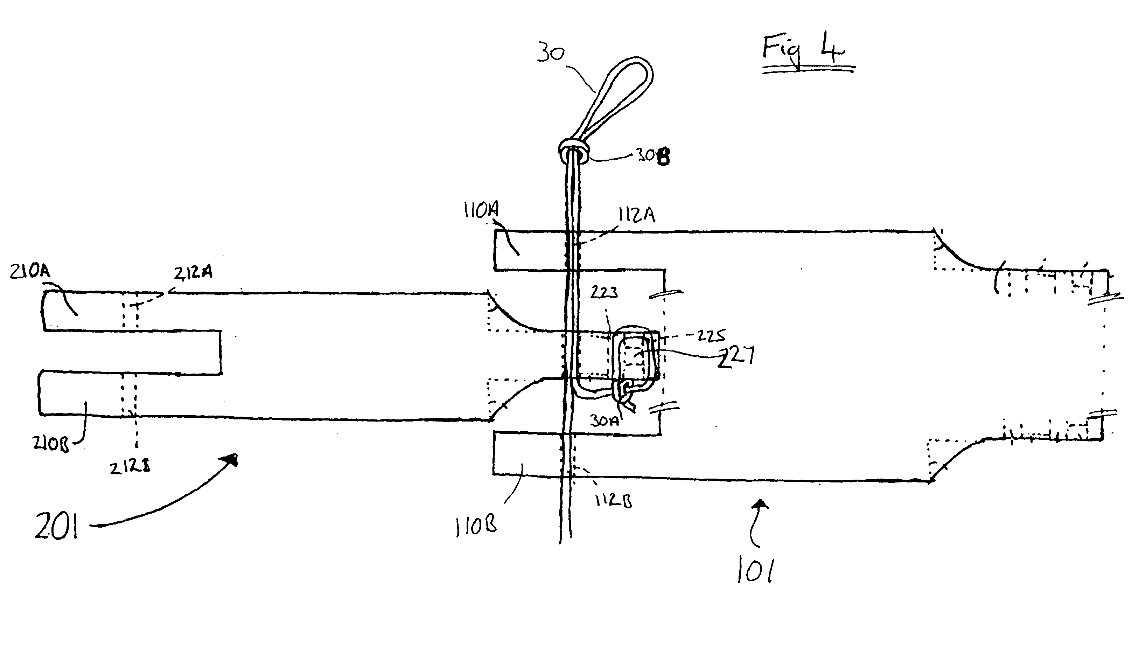

Fig. 4 illustrates schematically a preferred way of using a rope 30 as a securing member to secure first and second fenders 101, 102. The first fender 101 is shown exploded along a mid-line thereof but otherwise generally corresponds to the fender 1 as illustrated in Fig. 2c and similar reference numerals are used to designate similar elements, but are prefixed by the numeral 1. The second fender 201 generally corresponds to the fender as illustrated in Fig. 2c and similar reference numerals are used to designate similar elements but are prefixed by the numeral 2.

As illustrated in Fig. 4, a preferred method of securing the first and second fenders 101, 201 together includes using a rope 30 as a securing member. The rope passes through the eyelet aperture 223 of the second fender 201 and is tied around the tying member 227 to form a first knot 30A thus securing the rope to the second fender 201. The rope 30 then passes through the tongue connection aperture 222 of the second fender 201, and through the first-arm aperture 112A of the first fender 101 where it is tied off to form a second knot 30B. The rope then passes back through the first-arm aperture 112A of the first fender 101, through the tongue connection aperture 222 of the second fender 201 and through the second-arm aperture 112B of the first fender 101, thus effectively securing the two fenders together.

Although, for illustrative purposes, the section of the rope adjacent the tongue 221 is shown as standing proud of the tongue 221 it will be appreciated that in use this section of the rope, including the first knot 30A, will be located in the end notch 225 grooves 23A, 23B, 25A, 25B (see Fig. 2c) and will therefore not stand proud of the tongue surface. This allows the planar surfaces of the tongue 221, in use, to slide over the planar surfaces of the arms 110A, 110B to allow pivoting of the first and second fenders.

The described embodiments thus provide a fender which can be used as a conventional cylindrical fender by tying a rope around the tying member 27 using the eyelet aperture 23 and hanging in the conventional way. The described embodiments also provide a fender system in which each fender can be connected and secured to one or more similar fenders in order to provide a secured elongate row of fenders. The connection portions of the secured fenders overlap so that the row forms an elongate continuous composite fender which eliminates the need for use of a plank in many situations where a plank would be necessary if conventional fenders were used. The overlapping of the connection portions is an important feature of preferred embodiments, since this prevents irregularities in a mooring surface working their way between the connected fenders due to the constant motion of the moored boat.

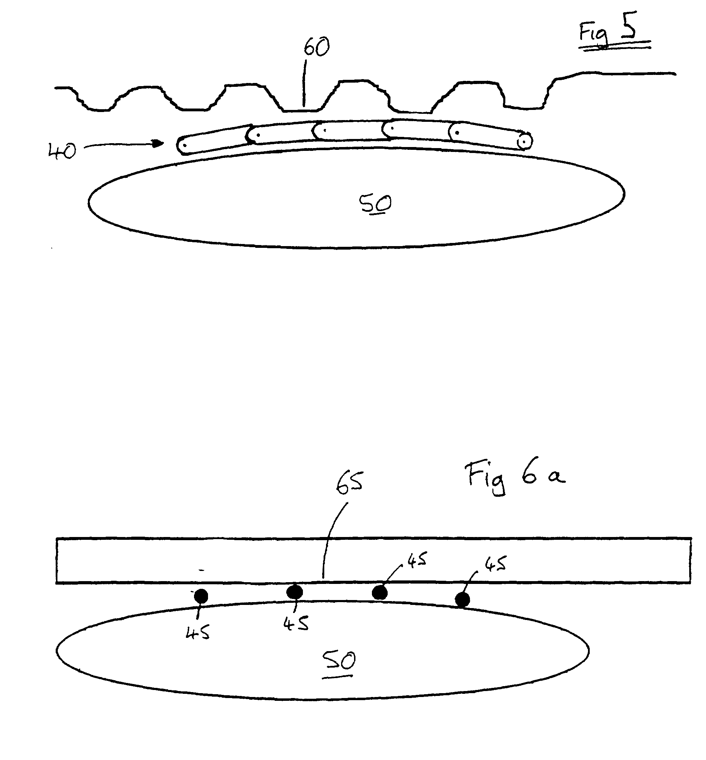

Fig. 5 illustrates use of an elongate composite fender 40 formed from five connected and secured fenders of the type illustrated in Figs. 2a, 2b and 2c in protecting a boat 50 moored against an irregular mooring surface 60.

Fig. 6a illustrates the use of prior art fenders 45 in protecting a boat 50 moored against a regular mooring surface 65.

Fig. 6b illustrates the use (and inadequacy) of prior art fenders 45 in protecting a boat 50 moored against an irregular mooring surface 60.

Fig. 6c illustrates a prior art method of protecting a boat 50 moored against an irregular mooring surface 60 by using a number of prior art fenders 45 in conjunction with a plank 48.

Variations and modifications may be provided without departing from the scope of the invention. For example, in the illustrated embodiments each fender is shown to have a female (mortise-like in the embodiments) connection portion and a male (tenon-like) connection portion to enable each fender to be connected to at least one similar fender. However, it would be possible to provide a fender system in which a first type of fender includes two connection portions, each having a male part, and a second type of fender includes two connection portions each having a female part. In this case, a row of fenders can be connected by alternating the first and second types of fender. (It is intended that the term "similar fender" used herein should include such varying types.)

Fenders in accordance with the present invention may be provided in any of a number of sizes according to the size of boat for which they are intended. Typical dimensions might include diameters of about 6 to 12 inches (15 to 30 cm) and lengths of about 12 to 36 inches (30 to 90 cm).

In use it may not be desirable to have a fender in which the arm portions 10A, 10B have nothing between them, because if the arm portions are forced together, they may be deformed and/or damaged. A preferred embodiment of a fender system in accordance with the present invention thus includes a number of closing members, each preferably generally similar in shape to a male connection portion or tongue. The closing members are adapted to be connected and secured to a female connection portion of a fender in order to 'close off' and support the female connection portion. Such a closing member could be connected and secured by similar means to those used to connect and secure the fenders together or, because a less secure connection might be required, an alternative securing means, such as a hook and loop fastener, could be used.

The securing member used in the illustrated embodiments is in the form of a rope. However, other forms of securing members could be used, for example resilient plastic or rubber bolts or rods are envisaged.

Fenders in accordance with the present invention may be of inflatable type, further increasing the ease with which they can be stored when not in use. A preferred embodiment of an inflatable fender in accordance with the present invention is formed from a plastic material approximately 2 mm thick and includes a non-return valve to facilitate inflation and reduce the risk of inadvertent deflation. Connection portions of inflatable fenders could be formed from generally the same thickness and type of the material as the remainder of the fender, or could be reinforced with additional material of the same, or of a different type. The closing member, as discussed above, could also be inflatable.

## Claims

1. A fender (1) for a boat wherein said fender (1) includes at least two connection portions (10, 20) able to overlap longitudinally with a connection portion of a similar adjacent fender to form a connected row of fenders, wherein at least one connection portion (10) of said fender (1) includes one or more connection apertures (22) enabling the connection to a similar fender by insertion of a securing member (30) through the respective connection apertures of connection portions of each of the fenders (1) , and wherein each fender (1) is usable as a vertically hanging fender without disconnection of any securing member,
**characterised in that** said connection portions (10, 20) allow pivotal motion for the fender (1) with respect to an adjacent connected fender.

2. A fender as claimed in Claim 2 wherein said the securing member (30) is rope.

3. A fender as claimed in Claim 1 or Claim 2 wherein at least one of the connection portions (10, 20) includes an arcuate portion (24) in order to allow relative pivotal motion of connected fenders.

4. A fender as claimed in any one of the preceding Claims wherein said connection portions (10, 20) allow pivotal motion of the fender (1), with respect to an adjacent connected fender, in a first plane but restrict or substantially prevent pivotal motion in a second, substantially orthogonal, plane.

5. A fender as claimed in any of the preceding Claims wherein said connection portions (10, 20) include faces adapted to co-operate with faces of adjacent connected fenders so that the faces slidingly engage each other to allow relative pivotal motion of connected fenders.

6. A fender as claimed in Claim 5 wherein at least one of said faces includes at least one groove (23A) in order to allow a connection member to be recessed therein.

7. A fender as claimed in any preceding claim wherein the fender (1) includes a connection portion having a male connection part (21) adapted to be received in a female connection part (11) of an adjacent fender.

8. A fender as claimed in any preceding claim wherein the fender includes a connection portion having a female connection part (11) adapted to receive a male connection part (21) of an adjacent fender.

9. A fender as claimed in either of Claims 7 or 8 wherein at least one connection portion includes at least one of a female connection portion in the form of a mortise-like part and a male connection portion in the form of a tenon-like part.

10. A fender as claimed in any one of Claims 7 to 9 which includes a closing member for closing off the female connection part of the fender.

11. A fender system comprising a number of elongate fenders connected end to end in order to form a composite elongate fender, each fender being as defined in any one of Claims 1 to 10.

12. A fender system as claimed in Claim 11 wherein the composite elongate fender is connectable at both ends, and is relatively flexible in a first plane but relatively inflexible in a second, substantially orthogonal, plane.

13. A fender system as claimed in either of Claims 11 or 12 wherein the composite elongate fender provides protection along substantially its entire length.

14. A fender system as claimed in any of Claims 11 to 13 wherein at least one of the fender elements has a female connection part and wherein there is provided a closing member for closing off said female connection part.

## Patentansprüche

1. Ein Fender (1) für ein Boot, wobei der Fender (1) mindestens zwei Verbindungsabschnitte (10, 20) umfasst, die sich in Längsrichtung mit einem Verbindungsabschnitt eines ähnlichen, anliegenden Fenders überlappen können, um eine verbundene Reihe von Fendern zu bilden, wobei mindestens ein Verbindungsabschnitt (10) des Fenders (1) eine oder mehrere Verbindungsöffnungen (22) umfasst, die die Verbindung mit einem ähnlichen Fender durch Einführen eines Befestigungsteils (30) durch die jeweiligen Verbindungsöffnungen der Verbindungsabschnitte von jedem der Fender (1) ermöglichen, und wobei jeder Fender (1) als ein senkrecht hängender Fender verwendet werden kann, ohne ein Befestigungsteil zu trennen, **dadurch gekennzeichnet, dass** die Verbindungsabschnitte (10, 20) Schwenkbewegung des Fenders (1) in Bezug auf einen anliegenden verbundenen Fender erlauben.

2. Fender gemäß Anspruch 1, wobei der Befestigungsteil (30) ein Seil ist.

3. Fender gemäß Anspruch 1 oder Anspruch 2, wobei mindestens einer der Verbindungsabschnitte (10, 20) einen bogenförmigen Abschnitt (24) umfasst, um relative Schwenkbewegung der verbundenen Fender zu erlauben.

4. Fender gemäß einem der vorhergehenden Ansprüche, wobei die Verbindungsabschnitte (10, 20) Schwenkbewegung des Fenders (1) in Bezug auf einen anliegenden verbundenen Fender in einer ersten Ebene erlauben, aber Schwenkbewegung in einer zweiten, im Wesentlichen rechtwinkligen Ebene einschränken oder im Wesentlichen verhindern.

5. Fender gemäß einem der vorhergehenden Ansprüche, wobei die Verbindungsabschnitte (10, 20) Flächen umfassen, die angepasst sind, um mit Flächen der anliegenden verbundenen Fender zusammenzuwirken, so dass die Flächen gleitend ineinander eingreifen, um relative Schwenkbewegung der verbundenen Fender zu erlauben.

6. Fender gemäß Anspruch 5, wobei mindestens eine der Flächen mindestens eine Rille (23A) umfasst, damit ein Verbindungsteil darin vertieft werden kann.

7. Fender gemäß einem der vorhergehenden Ansprüche, wobei der Fender (1) einen Verbindungsabschnitt mit einer männlichen Verbindungskomponente (21) umfasst, die angepasst ist, um in eine weibliche Verbindungskomponente (11) eines anliegenden Fenders aufgenommen zu werden.

8. Fender gemäß einem der vorhergehenden Ansprüche, wobei der Fender einen Verbindungsabschnitt mit einer weiblichen Verbindungskomponente (11) umfasst, die angepasst ist, um eine männliche Verbindungskomponente (21) eines anliegenden Fenders aufzunehmen.

9. Fender gemäß Anspruch 7 oder 8, wobei mindestens ein Verbindungsabschnitt mindestens entweder einen weiblichen Verbindungsabschnitt in Form einer stemmlochartigen Komponente oder einen männlichen Verbindungsabschnitt in Form einer zapfenartigen Komponente umfasst.

10. Fender gemäß einem der Ansprüche 7 bis 9, der einen Absperrteil zum Absperren der weiblichen Verbindungskomponente des Fenders umfasst.

11. Ein Fendersystem, das aus einer Anzahl von länglichen Fendem besteht, die an ihren Enden verbunden sind, um einen zusammengesetzten, länglichen Fender zu bilden, wobei jeder Fender gemäß einem der Ansprüche 1 bis 10 ist.

12. Fendersystem gemäß Anspruch 11, wobei der zusammengesetzte, längliche Fender an beiden Enden verbunden werden kann, und in einer ersten Ebene relativ flexibel ist, aber in einer zweiten, im Wesentlichen rechtwinkligen Ebene, relativ unflexibel ist.

13. Fendersystem gemäß Anspruch 11 oder 12, wobei der zusammengesetzte, längliche Fender im Wesentlichen entlang seiner gesamten Länge Schutz bietet.

14. Fendersystem gemäß einem der Ansprüche 11 bis 13, wobei mindestens eines der Fenderelemente eine weibliche Verbindungskomponente aufweist, und wobei ein Absperrteil zum Absperren der weibliche Verbindungskomponente bereitgestellt ist.

## Revendications

1. Une défense (1) pour un bateau dans laquelle ladite défense (1) comporte au moins deux portions de raccordement (10, 20) capables de chevaucher longitudinalement une portion de raccordement d'une défense adjacente similaire pour former une rangée raccordée de défenses, dans laquelle au moins une portion de raccordement (10) de ladite défense (1) comporte une ou plusieurs ouvertures de raccordement (22) autorisant le raccordement à une défense similaire par insertion d'un élément d'assujettissement (30) à travers les ouvertures de raccordement respectives de portions de raccordement de chacune des défenses (1), et dans laquelle chaque défense (1) est utilisable comme une défense pendant verticalement sans détacher aucun élément d'assujettissement, **caractérisée en ce que** lesdites portions de raccordement (10, 20) permettent un mouvement pivotant de la défense (1) par rapport à une défense raccordée adjacente.

2. Une défense telle que revendiquée dans la revendication 1 dans laquelle ledit élément d'assujettissement (30) est de la corde.

3. Une défense telle que revendiquée dans la revendication 1 ou la revendication 2 dans laquelle au moins l'une des portions de raccordement (10, 20) comporte une portion arquée (24) afin de permettre un mouvement pivotant relatif de défenses raccordées.

4. Une défense telle que revendiquée dans l'une quelconque des revendications précédentes dans laquelle lesdites portions de raccordement (10, 20) permettent un mouvement pivotant de la défense (1) par rapport à une défense raccordée adjacente, dans un premier plan, mais restreignent ou empêchent substantiellement un mouvement pivotant dans un deuxième plan substantiellement orthogonal.

5. Une défense telle que revendiquée dans n'importe lesquelles des revendications précédentes dans laquelle lesdites portions de raccordement (10, 20) comportent des faces adaptées pour coopérer avec des faces de défenses raccordées adjacentes de sorte que les faces se mettent en prise les unes avec les autres par glissement pour permettre un mouvement pivotant relatif de défenses raccordées.

6. Une défense telle que revendiquée dans la revendication 5 dans laquelle au moins l'une desdites faces comporte au moins une rainure (23A) afin de permettre à un élément de raccordement d'y être encastré.

7. Une défense telle que revendiquée dans n'importe quelle revendication précédente dans laquelle la défense (1) comporte une portion de raccordement ayant une pièce de raccordement mâle (21) adaptée pour être reçue dans une pièce de raccordement femelle (11) d'une défense adjacente.

8. Une défense telle que revendiquée dans n'importe quelle revendication précédente dans laquelle la défense comporte une portion de raccordement ayant une pièce de raccordement femelle (11) adaptée pour recevoir une pièce de raccordement mâle (21) d'une défense adjacente.

9. Une défense telle que revendiquée dans l'une ou l'autre des revendications 7 et 8 dans laquelle au moins une portion de raccordement comporte au moins soit une portion de raccordement femelle sous la forme d'une pièce ressemblant à une mortaise, soit une portion de raccordement mâle sous la forme d'une pièce ressemblant à un tenon.

10. Une défense telle que revendiquée dans l'une quelconque des revendications 7 à 9 qui comporte un élément de fermeture pour fermer la pièce de raccordement femelle de la défense.

11. Un système de défenses comprenant un certain nombre de défenses allongées raccordées bout à bout afin de former une défense allongée composite, chaque défense étant telle que définie dans l'une quelconque des revendications 1 à 10.

12. Un système de défenses tel que revendiqué dans la revendication 11 dans lequel la défense allongée composite peut être raccordée au niveau des deux extrémités, et est relativement flexible dans un premier plan mais relativement inflexible dans un deuxième plan substantiellement orthogonal.

13. Un système de défenses tel que revendiqué dans l'une ou l'autre des revendications 11 et 12 dans lequel la défense allongée composite fournit une protection sur substantiellement toute sa longueur.

14. Un système de défenses tel que revendiqué dans n'importe lesquelles des revendications 11 à 13 dans lequel au moins l'un des éléments de défense a une pièce de raccordement femelle et dans lequel un élément de fermeture est fourni pour fermer ladite pièce de raccordement femelle.
